# EUROPÄISCHE PATENTSCHRIFT

(11) **EP 1 460 300 B1**
(45) Veröffentlichungstag und Bekanntmachung des Hinweises auf die Patenterteilung: **20.08.2008**
(21) Anmeldenummer: 04101130.5
(22) Anmeldetag: 18.03.2004
(51) Int. Cl.: F16D 65/14, F16D 66/00

(54) **Verfahren zum Betrieb von Feststellbremsen für elektromechanisch betätigbare Scheibenbremsen.**
Method of operation for parking brakes used with electromechanically actuated disc brakes.
Procédé de mise en service des freins de stationnement pour freins à disque d'actionnement éléctromécanique.

(30) Priorität: 18.03.2003 DE 10311750; 05.06.2003 DE 10325414
(43) Veröffentlichungstag der Anmeldung: 22.09.2004
(73) Patentinhaber: Continental Teves AG & Co. oHG, 60488 Frankfurt am Main (DE)
(72) Erfinder: Linhoff, Paul, 61267 Neu-Anspach (DE); Drumm, Stefan A, 55291 Saulheim (DE); Maron, Christof, Dr., 65779 Kelkheim (DE)

(56) Entgegenhaltungen:
- EP-A- 0 995 657
- EP-A- 1 203 895
- EP-A- 1 279 854
- DE-A- 19 807 328

## Beschreibung

Die Erfindung betrifft ein Verfahren zum Betrieb einer elektromechanisch betätigbaren Scheibenbremse für Kraftfahrzeuge mit einer Feststellbremsvorrichtung und einer Betätigungseinheit, die zur Erzeugung einer Bremskraft eine elektromechanische Antriebseinheit aufweist, von der mindestens ein mechanisch-rotatorisches Element durch eine Verriegelungseinheit mit einem Verriegelungselement verriegelbar ist, sowie mit einem Spannkraftsensor oder einem Sensor zur Erkennung der Winkelstellung des mechanisch-rotatorischen Elements.

Eine derartige elektromechanisch betätigbare Scheibenbremse ist aus der Patentanmeldung DE 198 07 328 A1 bekannt. Die vorbekannte Scheibenbremse weist eine Spindel/Muttergetriebeanordnung auf, deren Spindel drehfest mit einem Zahnkranz verbunden ist. Zum Verriegeln eines als mechanisch-rotatorisches Element ausgebildeten Rotors während einer Feststellbremsvorgang ist als Verriegelungselement eine Sperrklinke vorgesehen.

Als weniger vorteilhaft ist beim Betrieb der vorbekannten Scheibenbremse anzusehen, dass die zur Verriegelung des Rotors betätigte Sperrklinke nicht in jeder Winkelstellung des Rotors eine sofortige Verriegelung/Blockierung bewirkt. Der Rotor dreht sich um einen sogenannten Aktivierungswinkel entgegen der Richtung, die eine Erhöhung der Zuspannkraft entsprechen würde, zurück bis die Sperrklinke die Verriegelungsposition erreicht hat. Dies hat jedoch zur Folge, dass die eingestellte Zuspannkraft verringert wird, was als nachteilig angesehen wird.

Es ist daher Aufgabe der vorliegenden Erfindung, eine elektromechanisch betätigbare Scheibenbremse der eingangs genannten Gattung derart zu betreiben, dass eine Verringerung der für einen Feststellbremsvorgang eingestellten Zuspannkraft vermieden wird.

Diese Aufgabe wird erfindungsgemäß dadurch gelöst, dass das mechanisch-rotatorische Element nach Einstellung der für einen Feststellbremsvorgang erforderlichen Zuspannkraft vor der Betätigung des Verriegelungselementes um einen bestimmten Winkelbetrag in diejenige Richtung weiter gedreht wird, die einer Erhöhnung der Zuspannkraft entspricht.

Zur Konkretisierung des Erfindungsgedankens ist vorgesehen, dass die Verriegelungseinheit durch eine Sperrklinke und ein Zahnrad gebildet wird, dessen Teilungswinkel den Winkelbetrag bestimmt.

Bei einer vorteilhaften Ausgestaltung des Erfindungsgegenstandes wird der Winkelbetrag aus einem zusätzlichen Zuspannkraftbetrag bestimmt, der durch die Anzahl der Verriegelungspositionen der Verriegelungseinheit und aus einem Sicherheitsbetrag bestimmt wird. Dabei ist vorgesehen, dass der Sicherheitsbetrag mit Hilfe der Steifigkeit des Bremssattels und der Betätigungseinheit, sowie mit der ermittelten oder geschätzten Temperatur der Scheibenbremse bestimmt wird.

Bei einer weiteren vorteilhaften Ausgestaltung des Erfindungsgegenstandes werden die Verriegelungspositionen der Verriegelungseinheit mit Hilfe des Sensors zur Erkennung der Winkelstellung des mechanisch-rotatorischen Elements ermittelt und in einem elektronischen Speichermedium gespeichert werden und der Winkelbetrag zum Weiterdrehen des mechanisch-rotatorischen Elements aus dem Vergleich der aktuellen Winkelstellung des mechanisch-rotatorischen Elements und der gespeicherten Verriegelungspositionen bestimmt.

Die Erfindung wird in der nachfolgenden Beschreibung eines Ausführungsbeispiels unter Bezugnahme auf die beiliegenden Zeichnungen näher erläutert. In der Zeichnung zeigt:
- Fig. 1: eine Ausführung einer elektromechanisch betätigbaren Scheibenbremse im Axialschnitt, an der das erfindungsgemäße Verfahren durchgeführt werden kann,
- Fig. 2: eine schematische Darstellung einer Verriegelungseinheit, die aus einem Zahnrad und einer Sperrklinke gebildet ist, im nicht verriegelten Zustand,
- Fig. 3: eine schematische Darstellung einer Verriegelungseinheit mit betätigter Sperrklinke und
- Fig.4: eine schematische Darstellung einer Verriegelungseinheit im verriegelten Zustand.

Die in der Zeichnung dargestellte, elektromechanisch betätigbare Scheibenbremse, an der das erfindungsgemäße Verfahren durchgeführt werden kann, wird aus einer Betätigungseinheit und einem lediglich schematisch angedeutetem Bremssattel, der in einem nicht gezeigten feststehenden Halter verschiebbar gelagert ist, gebildet. Ein Paar von Reibbelägen 4 und 5 ist im Bremssattel derart angeordnet, dass sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 15 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt.

Die Betätigungseinheit, die mittels nicht gezeigter Befestigungsmittel am Bremssattel angebracht ist, weist einen modularen Aufbau auf und besteht im wesentlichen aus drei selbständig handhabbaren Baugruppen bzw. Modulen, und zwar aus einer elektromechanischen Antriebseinheit 1, einem den ersten Reibbelag 4 betätigenden ersten Untersetzungsgetriebe 2 und einem zwischen der elektromechanischen Antriebseinheit 1 und dem ersten Untersetzungsgetriebe 2 wirkungsmäßig geschalteten zweiten Untersetzungsgetriebe 3.

Die vorhin erwähnte elektromechanische Antriebseinheit 1 besteht aus einem Elektromotor 11, der im dargestellten Beispiel als ein permanentmagneterregter, elektronisch kommutierter Motor ausgebildet ist, dessen Stator 9 unbeweglich in einem Motorgehäuse 12 angeordnet ist und dessen Rotor 10 durch einen ringförmigen Träger 13 gebildet ist, der mehrere Permanentmagnetsegmente 14 trägt. Zwischen dem Torque-Motor 11 und dem vorhin erwähnten Betätigungselement 15 ist wirkungsmäßig das erste Untersetzungsgetriebe 2 angeordnet, das als ein Kugelgewindetrieb 16 bis 18 ausgebildet ist, das in einem Getriebegehäuse 19 gelagert ist. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindemutter 16 umlaufen und die Gewindespindel 17 in eine axiale bzw. translatorische Bewegung versetzen.

Die Anordnung ist dabei derart getroffen, dass der Rotor 10 des Motors 11 unter Zwischenschaltung des zweiten Untersetzungsgetriebes 3 die Gewindemutter 16 antreibt, während die Gewindespindel 17 mittels einer Druckstange 24 mit dem vorhin erwähnten Betätigungselement 15 zusammenwirkt, das vorzugsweise durch eine Kraftübertragungsplatte gebildet ist, die sich am ersten Reibbelag 4 abstützt. Die Druckstange 24, die von einer in der Gewindespindel 17 ausgebildeten, konischen Bohrung 25 aufgenommen wird, stützt sich verdrehgesichert einerseits mittels eines Mehrkants 28 in einem axialen Fortsatz 26 der Kraftübertragungsplatte 15 und andererseits am Boden der Bohrung 25 ab. Um die im Betrieb der Betätigungseinheit auftretenden Querkräfte in das Getriebegehäuse 19 einzuleiten ist die Kraftübertragungsplatte 15 mit zwei radial gegenüberliegenden Führungsbolzen 20 versehen, die in im Getriebegehäuse 19 ausgebildeten Führungsflächen bzw. Bohrungen 21 geführt sind. Der Lagerung der Gewindemutter 16 im Getriebegehäuse 19 dient ein Axiallager bzw. Kugellager, das aus einem an der Gewindemutter 16 ausgeformten radialen Kragen 29, mehreren, nicht näher bezeichneten Kugeln sowie einem Lagerring 22 besteht. Zwischen dem Lagerring 22 und einer im Getriebegehäuse 19 ausgebildeten ringförmigen Abstützfläche ist ein Spannkraftsensor 23 angeordnet, der der Ermittlung der von der Betätigungseinheit aufgebrachten Spannkraft dient.

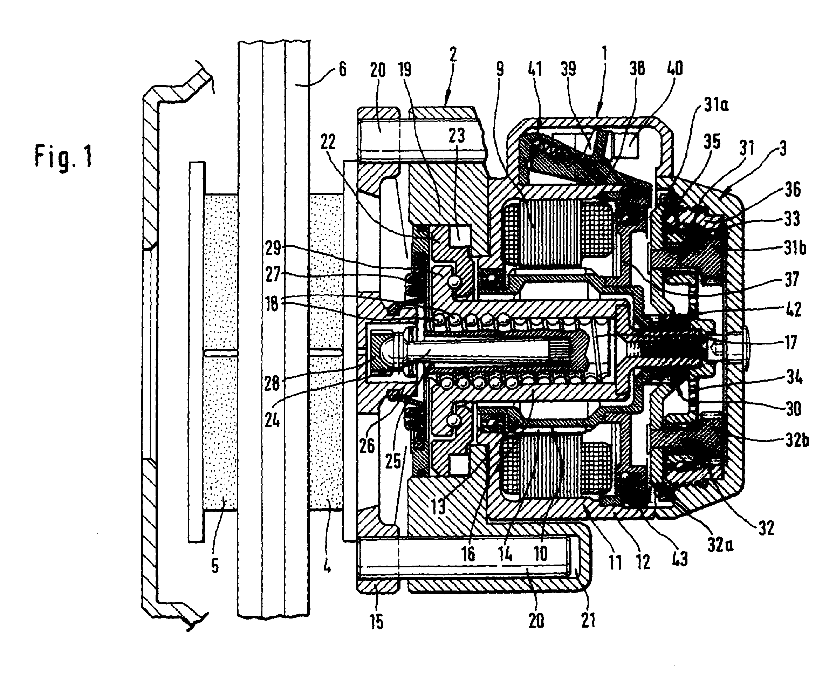

Um die Funktion einer Feststellbremse realisieren zu können weist die Betätigungseinheit elektromechanische Mittel auf, die, mit dem Rotor 10 des Elektromotors 11 zusammenwirkend, sein Verriegeln ermöglichen. Im in Fig. 1 gezeigten Ausführungsbeispiel trägt der Rotor 10 zu diesem Zweck einen Zahnkranz 37, mit dessen Verzahnung eine Sperrklinke 38 in Eingriff bringbar ist. Die der Sperrklinke 38 zugeordnete elektrische Aktuatorik 7 ist in der Art eines mechanischen Flip-Flops aufgebaut, dessen Zustand bei jeder kurzen Bestromung geändert wird. Bei der dargestellten Ausführung ist die Sperrklinke 38 mit einem lediglich schematisch angedeuteten Permanentmagneten 39 versehen, der mit Hilfe einer Spule 40 bewegt wird. Außerdem kann die Sperrklinke 39 mit Rastmitteln ausgestattet sein, die mit dem Bezugszeichen 41 versehen sind und die ein Verrasten der Sperrklinke 39 in der betätigten sowie in der unbetätigten Stellung ermöglichen. Dabei ist es besonders sinnvoll, wenn der vorhin erwähnte Zahnkranz 37 einen Bestandteil eines Radiallagers 43 bildet, in dem der Rotor 10 gelagert ist. Außerdem ist der Zahnkranz 37 als Teil eines nicht näher dargestellten Lageerkennungssystems 46 ausgebildet sein, mit dessen Hilfe die aktuelle Winkelstellung des Rotors 10 ermittelt wird. Die Lageinformation wird mittels eines Hallsensors oder eines magnetoresistiven Elements ermittelt.

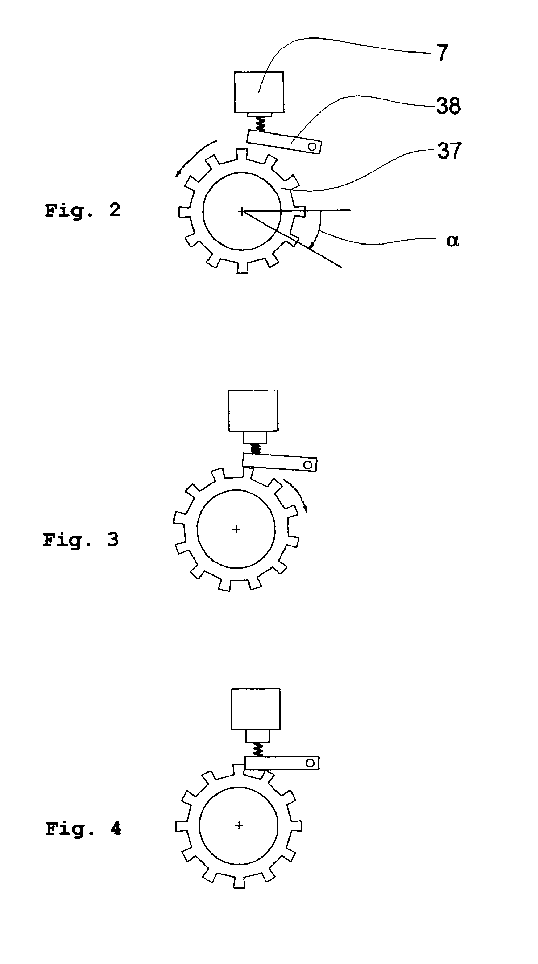

Die in Fig.2 vereinfacht dargestellte Verriegelungseinheit, weist die bereits erwähnte Sperrklinke 38, den Zahnkranz 37, sowie die elektrische Aktuatorik 7 auf. Der Pfeil stellt die Drehrichtung des Rotors 10 dar, die eine Erhöhung der Zuspannkraft bewirkt. Bei dem in Fig.2 dargestellten Zustand, ist die Sperrklinke 38 nicht betätigt und somit ist der Rotor 10 nicht verriegelt.

Zum Einleiten eines Feststellbremsvorgangs wird die Sperrklinke 38 betätigt, indem die Spule 40 kurzzeitig bestromt wird um den Permanentmagneten 39 zu bewegen. Dabei ist es möglich, dass die Sperrklinke 38 gerade auf einen Zahn des Zahnkranzes 37 trifft, wie es in Fig.3 dargestellt ist. Der Rotor 10 ist in diesem Zustand nicht verriegelt und wird sich um den sogenannten Aktivierungsdrehwinkel entgegen der Drehrichtung, die eine Erhöhung der Zuspannkraft bewirken würde (Pfeil), zurückdrehen bis die Sperrklinke 38 eine Verriegelungsposition erreicht hat (Fig.4).

Das Zurückdrehen des Rotors 10 um den Betrag des Aktivierungswinkels, entgegen der Richtung, die eine Erhöhung der Zuspannkraft bewirken würde, hat einen unerwünschten Verlust der Zuspannkraft zur Folge. Deshalb wird erfindungsgemäß vorgeschlagen, dass der Rotor 10 nach Einstellung der für einen Feststellbremsvorgang erforderlichen Zuspannkraft vor der Betätigung der Sperrklinke 38 um einen bestimmten Winkelbetrag in diejenige Richtung weiter gedreht wird, die einer Erhöhnung der Zuspannkraft entspricht. Dabei wird die Winkelstellung des Rotors 10 vom bereits erwähnten Lageerkennungssystems 46 bestimmt und der Winkelbetrag zum Weiterdrehen des Rotors entspricht dem Teilungswinkel α des Zahnkranzes 37, der von der Anzahl der Zähne des Zahnkranzes 37 abhängt. Dadurch erreicht die Sperrklinke 38 die nächste Verriegelungsposition in derjenigen Drehrichtung, die eine Erhöhung der Zuspannkraft bewirkt. Durch diese Maßnahme wird gewährleistet, dass der Rotor 10 in einem Zustand verriegelt wird, bei dem die Zuspannkraft mindestens gleich groß, wie die eingestellte Zuspannkraft ist.

Alternativ kann der Winkelbetrag zum Weiterdrehen des Rotors 10 vor der Betätigung der Sperrklinke 38 auch aus einem zusätzlichen Zuspannkraftbetrag bestimmt werden. Dies ist vor allem dann sinnvoll und erforderlich, wenn kein Sensor zur Erkennung der Winkelstellung des Rotors 10 vorgesehen ist. Nach der Einstellung der erforderlichen Zuspannkraft, die vom Spannkraftsensor 23 ermittelt wird, wird der Rotor 10 weitergedreht, bis der zusätzliche Zuspannkraftbetrag eingestellt ist. Dieser zusätzliche Zuspannkraftbetrag wird dabei derart gewählt, dass gewährleistet ist, dass die Sperrklinke 38 die nächste Verriegelungsposition in derjenigen Drehrichtung, die eine Erhöhung der Zuspannkraft bewirkt, erreicht. Zudem kann der zusätzliche Zuspannkraftbetrag durch einen Sicherheitsbetrag bestimmt werden. Dieser Sicherheitsbetrag berücksichtigt die geschätzten oder experimentell ermittelten Temperaturen und Temperaturdehnungen in der Scheibenbremse sowie die Steifigkeit des Bremssattels und der Betätigungseinheit, wodurch eventuell auftretende Spannkraftverluste beim Abkühlen der Bremse keine sicherheitsrelevante Folge hat.

Eine weitere erfindungsgemäße Alternative für die Bestimmung des Winkelbetrags um den der Rotor 10 weitergedreht wird, ist die Erfassung der Verriegelungspositionen des Rotors 10. Dabei ermittelt das Lageerkennungssystem 46 die Winkelstellung des Rotors 10, wenn die Sperrklinke 38 eine Verriegelungsposition erreicht hat. Die Winkelstellungen der Verriegelungspositionen werden in einem elektronischen Speichermedium gespeichert, das sich in der elektronischen Steuer- und Regeleinheit der Scheibenbremse befinden kann. Der Winkelbetrag zum Weiterdrehen des Rotors 10 nach Einstellung der erforderlichen Zuspannkraft ergibt sich dann aus dem Vergleich der aktuellen Winkelstellung des Rotors 10 und der Kenntnis der Winkelstellung der nächsten in Zuspannrichtung gelegenen Verriegelungsposition. Durch diese Maßnahmen bleibt die erforderliche Zuspannkraft für einen Feststellbremsvorgang erhalten.

## Patentansprüche

1. Verfahren zum Betrieb einer elektromechanisch betätigbaren Scheibenbremse für Kraftfahrzeuge mit einer Feststellbremsvorrichtung und einer Betätigungseinheit, die zur Erzeugung einer Bremskraft eine elektromechanische Antriebseinheit (1) aufweist, von der mindestens ein mechanisch-rotatorisches Element (97) durch eine Verriegelungseinheit mit einem Verriegelungselement (38) verriegelbar ist, sowie mit einem Spannkraftsensor oder einem Sensor zur Erkennung der Winkelstellung des mechanisch-rotatorischen Elements, **dadurch gekennzeichnet, dass** das mechanisch-rotatorische Element (37) nach Einstellung der für einen Feststellbremsvorgang erforderlichen Zuspannkraft vor der Betätigung des Verriegelungselementes (38) um einen bestimmten Winkelbetrag in diejenige Richtung weiter gedreht wird, die einer Erhöhnung der Zuspannkraft entspricht.

2. Verfahren nach Anspruch 1, **dadurch gekennzeichnet, dass** die Verriegelungseinheit durch eine Sperrklinke (38) und ein Zahnrad (37) gebildet wird, dessen Teilungswinkel den Winkelbetrag bestimmt.

3. Verfahren nach Anspruch 1, **dadurch gekennzeichnet, dass** der Winkelbetrag aus einem zusätzlichen Zuspannkraftbetrag bestimmt wird, der durch die Anzahl der Verriegelungspositionen der Verriegelungseinheit und aus einem Sicherheitsbetrag bestimmt wird.

4. Verfahren nach Anspruch 1, **dadurch gekennzeichnet, dass** die Verriegelungspositionen der Verriegelungseinheit mit Hilfe des Sensors zur Erkennung der Winkelstellung des mechanisch-rotatorischen Elements ermittelt und in einem elektronischen Speichermedium gespeichert werden und der Winkelbetrag zum Weiterdrehen des mechanisch-rotatorischen Elements aus dem Vergleich der aktuellen Winkelstellung des mechanisch-rotatorischen Elements und der gespeicherten Verriegelungspositionen bestimmt wird.

5. Verfahren nach Anspruch 3, **dadurch gekennzeichnet, dass** der Sicherheitsbetrag mit Hilfe der Steifigkeit des Bremssattels und der Betätigungseinheit, sowie mit der ermittelten oder geschätzten Temperatur der Scheibenbremse bestimmt wird.

## Claims

1. Method of operating an electromechanically operable disc brake for motor vehicles with a parking brake device and an actuating unit, which includes an electromechanical driving unit (1) for generating a brake force, with at least one mechanical-rotational element (37) of said device being lockable by a locking unit with a locking element (38), as well as with a tension force sensor or a sensor for detecting the angular position of the mechanical-rotational element,
**characterized in that** after the adjustment of the clamping force required for a parking brake operation, prior to the actuation of the locking element (38), the mechanical-rotational element (37) is rotated further by a defined angular amount **in that** direction which corresponds to an increase of the clamping force.

2. Method as claimed in claim 1,
**characterized in that** the locking unit is formed of a detent pawl (38) and a toothed wheel (37) whose angular pitch determines the angular amount.

3. Method as claimed in claim 1,
**characterized in that** the angular amount is determined from an additional amount of clamping force which is determined by the number of the locking positions of the locking unit and from a safety value.

4. Method as claimed in claim 1,
**characterized in that** the locking positions of the locking unit are found out using the sensor for the detection of the angular position of the mechanical-rotational element and are saved in an electronic memory medium, and the angular amount for continued rotation of the mechanical-rotational element is determined from the comparison between the current angular position of the mechanical-rotational element and the memorized locking positions.

5. Method as claimed in claim 3,
**characterized in that** the safety value is determined by way of the rigidity of the brake caliper and the actuating unit as well as with the determined or estimated temperature of the disc brake.

## Revendications

1. Procédé d'exploitation d'un frein à disque à actionnement électromécanique pour véhicule automobile avec un dispositif de frein de stationnement et une unité d'actionnement qui comporte, pour produire une force de freinage, une unité d'entraînement électromécanique (1) de laquelle au moins un élément (97) à rotation mécanique peut être verrouillé par une unité de verrouillage avec un élément de verrouillage (38), ainsi qu'avec un capteur de force de tension ou un capteur pour reconnaître la position angulaire de l'élément à rotation mécanique, **caractérisé en ce que** l'élément (37) à rotation mécanique est tourné encore, après réglage de la force de serrage nécessaire à un processus de freinage de stationnement, avant l'actionnement de l'élément de verrouillage (38), d'une valeur angulaire déterminée, dans la direction qui correspond à une augmentation de la force de serrage.

2. Procédé selon la revendication 1, **caractérisé en ce que** l'unité de verrouillage est formée par un cliquet d'arrêt (38) et une roue dentée (37) dont l'angle de division détermine la valeur angulaire.

3. Procédé selon la revendication 1, **caractérisé en ce que** la valeur angulaire est déterminée à partir d'une valeur de force de serrage supplémentaire qui est déterminée par le nombre de positions de verrouillage de l'unité de verrouillage et à partir d'une valeur de sécurité.

4. Procédé selon la revendication 1, **caractérisé en ce que** les positions de verrouillage de l'unité de verrouillage sont déterminées à l'aide du capteur de reconnaissance de la position angulaire de l'élément à rotation mécanique, et mémorisées dans un support de mémoire électronique, et la valeur angulaire est déterminée pour continuer la rotation de l'élément à rotation mécanique, à partir de la comparaison entre la position angulaire actuelle de l'élément à rotation mécanique et les positions de verrouillage mémorisées.

5. Procédé selon la revendication 3, **caractérisé en ce que** la valeur de sécurité est déterminée à l'aide de la rigidité de l'étrier de frein et de l'unité d'actionnement, ainsi qu'avec la température calculée ou estimée du frein à disque.
